# EUROPÄISCHE PATENTSCHRIFT

(11) **EP 4 295 206 B1**
(45) Veröffentlichungstag und Bekanntmachung des Hinweises auf die Patenterteilung: **21.05.2025**
(21) Anmeldenummer: 22708070.2
(22) Anmeldetag: 08.02.2022
(51) Int. Cl.: G05D 1/00, B63C 11/26, B63G 8/14, G01S 5/18

(54) **UNTERWASSER-KOMMUNIKATIONS- UND HOMING-SYSTEM**
UNDERWATER COMMUNICATION AND HOMING SYSTEM
SYSTÈME DE COMMUNICATION ET D'AUTOGUIDAGE SOUS-MARIN

(30) Priorität: 17.02.2021 DE 102021201480
(43) Veröffentlichungstag der Anmeldung: 27.12.2023
(73) Patentinhaber: thyssenkrupp Marine Systems GmbH, 24143 Kiel (DE); thyssenkrupp AG, 45143 Essen (DE)
(72) Erfinder: MALLETSCHEK, Andreas, 24340 Eckernfoerde (DE); RUNKOWSKE, Holger, 24253 Probsteierhagen (DE); PAULSEN, Christian, 24220 Flintbek (DE)
(74) Vertreter: thyssenkrupp Intellectual Property GmbH
(86) Internationale Anmeldenummer: PCT/EP2022/053020
(87) Internationale Veröffentlichungsnummer: WO 2022/175135

(56) Entgegenhaltungen:
- DE-A1- 102012 008 074
- DE-U1- 202016 008 794
- FR-A1- 2 926 901

## Beschreibung

Die Erfindung betrifft ein Verfahren zur gezielten Annährung eines Objekts an ein Unterwasserfahrzeug oder zur Fernsteuerung eines Objektes, wobei das Unterwasserfahrzeug seine Position möglichst nicht verraten soll.

Aus dem Stand der Technik sind viele Verfahren zur Kommunikation unter Wasser und zur Absicherung der Kommunikation unter Wasser bekannt.

Aus Postproceedings der DWT-Tagung, Seite 154ff, Unterwasserkommunikation mit Spezialkräften
(https://www.researchgate.net/publication/269873931_Schall_und_Schwingungen_Well en_und_ Turbulenz_in_sensibler_Umgebung) sind Modulationsverfahren bekannt, um Unterwasserkommunikation mit maximaler Verratsarmut zu betreiben.

Aus Akustische Unterwasserkommunikation (https://www.net.in.tum.de/fileadmin/TUM/NET/NET-2011-07-1/NET-2011-07-1_07.pdf) sind Nutzung von Schall zur Unterwasserkommunikation beschrieben.

Aus Spread Spectrum Modulation (http://www.dirubeze.de/funksysteme/skripte/DiFuSy/DiFuSy_SprSpec_WS0405.pdf) sind Verfahren zur absichtlichen spektralen Spreizung bei der Datenübertragung bekannt.

Diese Verfahren sind dazu geeignet, die Kommunikation an sich abzusichern. Aber um ein Treffen zwischen einem Objekt, beispielsweise und insbesondere einem Taucher, und einem Unterwasserfahrzeug, beispielsweise und insbesondere einem Unterseeboot, zu ermöglichen, oder ein definiertes Ziel anzusteuern, oder einen definieren Abstand einzuhalten müssen Ortsinformationen ausgetauscht werden, damit ein Treffen zwischen beiden Einheiten im vollständig getauchten Zustand erfolgen kann. Navigation auf Sicht ist Unterwasser aufgrund eingeschränkter Sichtweiten und/oder bei Nacht praktisch nicht zuverlässig.

Einfachstes Verfahren ist natürlich, dass das Unterwasserfahrzeug kontinuierlich ein Signal zur Ortung aussendet. Das Objekt kann das Unterwasserfahrzeug leicht ansteuern. Jedoch wird dadurch das Unterwasserfahrzeug auch durch jeden Dritten leicht zu orten. Daher ist dieses Verfahren in einem Einsatz nur unter größter Gefahr möglich.

Andererseits ist es möglich, dass das Objekt über ein aktives Sonar selber das Unterwasserfahrzeug ortet. Dieses verrät jedoch die Position des Objekts und erfordert große Energiemengen bei dem Objekt. Daher ist auch dieses Verfahren praktisch nicht anwendbar.

Aus der US 2016/0315717 A1 ist eine akustische Unterwasserkommunikation bekannt.

Aus der US 2012/0105246 A1 ist ein kontaktloses Unterwasserkommunikationsgerät bekannt.

Aus der DE 10 2013 000 671 A1 ist die Kommunikation zwischen einer Person und einem Unterseeboot mittels Datenleitung bekannt.

Aus der DE 20 2016 008 794 U1 ist eine Tauchmaske mit einer Telekommunikationsvorrichtung bekannt.

Aus der US 2017 / 0 243 471 A1 ist eine Notfallvorrichtung für Taucher bekannt.

Aus der FR 2 926 901 A1 ist ein Verfahren und eine Vorrichtung zur Bergung eines unbemannten Unterwasserfahrzeugs unter Wasser bekannt.

Aus der DE 10 2012 008074 A1 ist ein Bergeverfahren zum Bergen eines Unterwasserfahrzeugs, eine entsprechende Bergevorrichtung und ein Unterseeboot mit einer entsprechenden Bergevorrichtung bekannt.

Aufgabe der Erfindung ist es, ein Verfahren bereitzustellen, bei dem Objekt und das Unterwasserfahrzeug sich im getauchten Zustand treffen können, ohne einem Dritten die Position zu verraten, wobei die Priorität auf der Unentdeckbarkeit des Unterwasserfahrzeugs zu legen ist.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Verfahren dient zum Treffen wenigstens eines ersten Objekts und eines Unterwasserfahrzeugs an einem Treffpunkt unter Wasser. Das erste Objekt weist wenigstens eine erste Kommunikationsvorrichtung auf. Das Unterwasserfahrzeug weist wenigstens eine erste Schallempfangsvorrichtung und wenigstens eine erste Schallsendevorrichtung auf.

Das Verfahren weist die folgenden Schritte auf:
a) Vereinbaren eines Unterwassertreffpunktes zwischen dem ersten Objekt und dem Unterwasserfahrzeug,
b) Ansteuern des Unterwassertreffpunktes durch das erste Objekt,
c) Senden eines ersten ersten Signals durch die erste Kommunikationsvorrichtung des ersten Objekts,
d) Empfangen des ersten ersten Signals durch die erste Schallempfangsvorrichtung des Unterwasserfahrzeugs,
e) Abschätzen der weiteren Bewegung des ersten Objekts mit der derzeitigen Fortbewegungsrichtung,
f) Auswählen einer Handlungsoption durch das erste Unterwasserfahrzeug ausgewählt aus der Liste umfassend:
   (1) Verbleiben an der Position, sofern die derzeitige Fortbewegungsrichtung des ersten Objekts zum Unterwasserfahrzeug führt,
   (2) Ermitteln der durch das erste Objekt zu wählenden Fortbewegungsrichtung zum Erreichen des Treffpunkts durch das Unterwasserfahrzeug und Übertragen der Richtungsinformation in einem ersten zweiten Signal mittels der ersten Schallsendevorrichtung an die erste Kommunikationsvorrichtung, sofern eine aktive Übertragung als gefahrlos eingestuft wird,
   (3) Verfahren des Unterwasserfahrzeugs an einen aus der abgeschätzten weiteren Bewegung des ersten Objekts neuen Treffpunkt,
   (4) Ausfahren wenigstens einer Überwasserkommunikationsvorrichtung und warten auf eine Überwasserkontaktaufnahme durch das erste Objekt,
   (5) Abbruch des Versuchs eines Treffens und Entfernen des Unterseebootes, sofern ein Treffen als nicht sicher eingeschätzt wird,
Das Verfahren weist zusätzlich die folgenden Schritte auf:
g) Auswählen einer Handlungsoption durch das erste Objekt ausgewählt aus der Liste umfassend:
I Treffen mit dem Unterseeboot, oder sofern ein Treffen mit dem Unterseeboot nicht erfolgreich möglich ist,
II Verwendung der drahtlosen Kommunikation über Wasser zur Kontaktierung des Unterseebootes und wenn diese Kommunikation nicht erfolgreich ist, oder wenn dieses nicht erfolgreich ist
III Abbruch, beispielsweise schwimmende oder tauchende Rückkehr an Land.

Die Vereinbarung eines Unterwassertreffpunktes in Schritt a) kann vorab durch die beiden Parteien, beispielsweise vor dem Absetzen von Tauchern, vereinbart werden. Ebenso kann der Unterwassertreffpunkt durch eine dritte Partei gewählt und sowohl dem Unterseeboot als auch dem ersten Objekt übermittelt werden.

Ein Treffpunkt kann im Sinne der Erfindung ein Bereich sein, beispielsweise ein Bereich, in dem ein Sichtkontakt möglich ist. Hierbei kann die laterale Erstreckung des Bereichs innerhalb einer Ebene auch in Abhängigkeit der Tauchtiefe unterschiedlich groß gewählt werden. Zum einen kann die Tauchtiefe einfacher erfasst und überprüft werden, sodass eine ungewollte Veränderung für einen Taucher weniger wahrscheinlich ist. Zum anderen benötigen Taucher für eine Änderung der Tauchtiefe üblicherweise mehr Zeit (Dekompression).

Ein Treffpunkt kann auch zur Einnahme und vorzugsweise anschließendem Halten einer relativen Position zueinander dienen. Dieses ist beispielsweise bevorzugt, wenn das erste Objekt kein Taucher, sondern ein Gegenstand, beispielsweise ein AUV (autonomes Unterwasserfahrzeug), ist. Die Gefahr, dass dieses beispielsweise durch Anheften eines Sprengkörpers, manipuliert wurde ist hoch. Daher wird oft vermeiden, ein solches AUV wieder An Bord zu nehmen, da dann eine unmittelbare Gefahr für Unterwasserfahrzeug und dessen Besatzung besteht.

Ein Unterwassertreffpunkt umfasst wenigstens vier Koordinaten, drei im Raum und eine in der Zeit. Diese können auch einen Raum oder ein Intervall umfassen, beispielsweise kann anstelle eines Zeitpunktes auch ein Zeitintervall vereinbart sein.

Das Ausfahren wenigstens einer Überwasserkommunikationsvorrichtung und das Warten auf eine Überwasserkontaktaufnahme durch das erste Objekt (4) ist insbesondere für den Notfall relevant, wenn die primäre submarine Kontaktaufnahme nicht erfolgreich war.

Das Ansteuern in Schritt b) kann entweder durch das erste Objekt selber erfolgen, beispielsweise, wenn das erste Objekt ein Taucherverbringungsfahrzeug (Diver Propulsion Vehicle) ist. Das Ansteuern kann auch beispielsweise durch einen Taucher erfolgen, der beispielsweise das erste Objekt transportiert.

Das Auswählen der Handlungsoption in Schritt f) erfolgt nach der Abschätzung der weiteren Bewegung des ersten Objekts mit der derzeitigen Fortbewegungsrichtung unter Berücksichtigung des Lagebildes sowie der geografischen Umgebung. Das Lagebild umfasst insbesondere weitere Wasserfahrzeuge, insbesondere feindlich gesonnene Wasserfahrzeuge. Die geografische Umgebung umfasst insbesondere die Wassertiefe. Die Position zum Zeitpunkt des Sendens des ersten ersten Signals und die Fortbewegungsrichtung kann dabei aus dem auf dem Unterwasserfahrzeug empfangenen Signal entweder direkt ermittelt werden oder ergibt sich durch die Auswertung der am Unterwasserfahrzeug befindlichen Sensoren. Beispielsweise gibt das erste Objekt ein Schallsignal ab. Dieses Schallsignal kann beispielsweise mit Hilfe von Signalspreizung so abgestrahlt werden, dass es für den unwissenden Beobachter schwer detektierbar ist, für das Unterwasserfahrzeug aber bekannt. Dieses Schallsignal kann die Richtung der Bewegung enthalten. Ebenso kann über die Zeitdauer des ersten ersten Signals und die dabei erfolgte Positionsänderung des ersten Objektes die Bewegungsrichtung und Geschwindigkeit abgeschätzt werden. Weiter kann das erste Objekte mehrere erste Signale senden, sodass aus den unterschiedlichen Positionen zu unterschiedlichen Zeiten Richtung und Geschwindigkeit ermittelt werden kann. Das Unterwasserfahrzeug empfängt über seine Schallsensoren dieses Signal und kann die übertragene Information dekodieren. Des Weiteren kann das Unterwasserfahrzeug aufgrund seiner Schallsensoren die Position des ersten Objekts bestimmen. Das Auswählen der Handlungsoption erfolgt anschließend vorzugsweise nach der Reihenfolge der Wahrscheinlichkeit zur Vermeidung einer Entdeckung durch einen Dritten mit dem Ziel, das Treffen dennoch durchzuführen.

Option (1) stellt den Idealfall dar und wird gewählt, sofern sie möglich ist. Das erste Objekt bewegt sich also auf den vereinbarten Treffpunkt zu.

Die Wahl der Optionen (2) oder (3) erfolgen dann, falls die Option (1) nicht möglich ist, weil das erste Objekt beispielsweise durch eine Unterwasserströmung abdriftet und es somit den eigentlichen Treffpunkt verfehlen wird oder der Weg versperrt ist und der eigentlich Treffpunkt nicht erreicht werden kann. Hierbei ist die Option zu wählen, die entsprechend dem sich aktuell darstellenden Lagebild für das Unterwasserfahrzeug ergibt. Beide Optionen (2) und (3) haben gegenüber der Option (1) den Nachteil, dass diese Optionen mit einer zusätzlichen Geräuschentwicklung verbunden sind, welche von einem Feind entdeckt und zur Ortung des Unterwasserfahrzeugs verwendet werden kann. Bei Option (2) sendet das Unterwasserfahrzeug das erste zweite Signal aus. Zwar kann dieses bevorzugt bezüglich der Signalstärke an die Entfernung zum ersten Objekt angepasst werden, um das Signal so schwach wie möglich zu halten und so die Entdeckungswahrscheinlichkeit zu verringern, es ist aber dabei zu berücksichtigen, dass gerade Einheiten zur Bekämpfung von Unterseebooten (ASW), beispielsweise ASW Fregatten, aber auch andere Unterseeboote oftmals über ein sehr empfindliches Sonarsystem verfügen, sodass das erste zweite Signal auch noch aus sehr viel größerer Entfernung empfangen und dadurch das Unterwasserfahrzeug gegebenenfalls geortet werden kann. Ebenso führt das Verfahren in Schritt (3) zu einer Geräuschentwicklung. Auch diese kann über eine sehr geringe Geschwindigkeit minimiert werden, ein Entdeckungsrisiko besteht dabei jedoch immer. Daher kann beispielsweise eine aktive Übertragung als gefahrlos eingestuft werden, wenn beispielsweise alle registrierten Überwasserkontakte selbst bei Annahme einer maximalen Sonarempfindlichkeit so weit entfernt sind, dass diese das erste zweite Signal nicht mehr auflösen und damit detektieren können. Überwasserkontakte, die derart genau identifiziert wurden, dass deren Sonarfähigkeiten dem Unterwasserfahrzeug bekannt sind, beispielsweise ein Einsatzgruppenversorger, welcher bekannter Weise ohne eigenes Sonarsystem zur Ortung von Unterseebooten ausgeführt ist, kann entsprechend als weniger kritisch eingestuft werden und somit die aktive Übertragung selbst in Anwesenheit eines solchen identifizierten Kontakts als gefahrlos eingestuft werden. Hinzu kommt bei Option (3), dass das Anfahren des neuen Treffpunkts auch möglich sein muss, also beispielsweise die Wassertiefe ausreichend ist.

Option (4) wird vorzugsweise in den Fällen gewählt, wenn die Optionen (1), (2) und (3) nicht zur Verfügung stehen. Denn hierzu muss das Unterwasserfahrzeug wenigstens in die Nähe der Wasseroberfläche oder aufgetaucht sein. Beispielsweise kann sich das Unterwasserfahrzeug auf Ausfahrtiefe der Überwasserkommunikationsvorrichtung befinden. Dadurch können zum einen die Ausfahrgeräte als auch durch die eigene Kontur, insbesondere aus der Luft, leichter wahrgenommen werden kann. Das Entdeckungsrisiko ist somit höher. Diese Option kann bevorzugt daher nur gewählt werden, wenn keine Kontakte in Sichtlinie zum eigenen Standort vorhanden sind oder eine visuelle Entdeckung beispielsweise aufgrund der Witterungsbedingungen, beispielsweise durch Nebel, verhindert ist. Ebenso ist zu berücksichtigen, dass auch die Überwasserkommunikation von einem Dritten aufgefangen und zur Ortung des nun sogar in der Nähe der Wasseroberfläche befindlichen Unterwasserfahrzeugs genutzt werden kann. Daher scheidet die Option (4) insbesondere aus, wenn ein Seefernaufklärer, insbesondere mit der Fähigkeit zur Bekämpfung von Unterseebooten, in der Nähe ist. Beispiele für Seefernaufklärer sind die P3 Orion oder die Tu-142.

Wenn die Optionen (1) bis (4) alle ausgeschieden sind, verbleibt nur noch die Option (5), der Abbruch. In diesem Fall entfernt sich das Unterwasserfahrzeug und bringt sich dadurch in Sicherheit. Das erste Objekt muss dann selbst in Schritt g) gemäß Option III selber entscheiden, wie dieser Abbruch nach einem erfolglosen Treffversuch mit dem Unterwasserfahrzeug aussieht.

Durch das Verfahren wird die Anzahl und Intensität der Schallsignale minimiert und dadurch die Detektionswahrscheinlichkeit durch Dritte reduziert. Insbesondere erfolgt keine Schallabgabe durch das Unterwasserfahrzeug, ohne dass das erste Objekt in Reichweite ist. Die Aussendung des ersten ersten Signals erfolgt durch das erste Objekt und nicht durch das Unterwasserfahrzeug.

Objekt umfasst im Sinne der Erfindung beispielsweise und insbesondere Taucher. Weitere Objekte im Sinne der Erfindung sind auch beispielsweise Taucherhilfsmittel, beispielsweise Taucherverbringungsfahrzeuge (Diver Propulsion Vehicle), oder Unterwasserfahrzeuge, wie zum Beispiel und insbesondere autonome Unterwasserfahrzeuge, unbemannte Unterwasserfahrzeuge. Das erste Objekt kann eine von einem Taucher getragene Vorrichtung sein, beispielsweise am Unterarm getragene Vorrichtung.

Bei der Schallsendevorrichtung kann es sich beispielsweise um ein konventionelles Unterwassertelefon handeln.

Bei der Schallempfangsvorrichtung kann es sich beispielsweise um ein Sonar- und/oder Unterwasserkommunikationssystem des Unterwasserfahrzeugs handeln.

Insbesondere wenn aus den in Schritt d) empfangenen Daten ergeben, dass das Treffen am Treffpunkt wie geplant erfolgen wird, ist die Handlungsoption (1) bevorzugt.

Sofern sich aus den in Schritt d) empfangenen Daten ergibt, dass beispielsweise durch ein Abdriften durch Strömung das erste Objekt den Treffpunkt nicht wie geplant ansteuert und die Lage die Möglichkeit zur Unterwasserkommunikation gibt, so kann das Unterwasserfahrzeug nach Handlungsoption (2) Korrekturdaten mittels der ersten Schallsendevorrichtung an die erste Kommunikationsvorrichtung des ersten Objekts übertragen.

Als Alternative kann das Unterseeboot gemäß Handlungsoption (3) ohne Kontaktaufnahme einen neuen, korrigierten Treffpunkt anfahren, wenn dieses technisch und gefahrfrei möglich ist. Hierdurch entfällt die Notwendigkeit einer Kommunikation.

Als weitere Alternative kann das Unterseeboot gemäß Handlungsoption (4) auf eine Kontaktaufnahme über Wasser warten. Vorteil kann sein, dass diese Art der Kommunikation im Einzelfall eine geringere Entdeckungswahrscheinlichkeit haben kann. Außerdem kann somit schneller mehr Information ausgetauscht werden, was ebenfalls die Entdeckungswahrscheinlichkeit oder wenigstens die Ortungswahrscheinlichkeit reduziert.

Als letzte Handlungsoption (5) ergibt sich gegebenfalls die Notwendigkeit, dass sich das Unterseeboot zurückzieht. In diesem Fall muss das erste Objekt, insbesondere Taucher, an Land zurückkehren

Hieraus ergeben sich für das erste Objekt verschiedene mögliche Szenarien gemäß einer Weiterbildung des erfindungsgemäßen Verfahrens. Daher wird in Schritt g) eine Handlungsoption aus der oben genannten Liste ausgewählt.

Bevorzugt ist natürlich die Durchführung des Treffens, also beispielsweise die (Wieder-) Aufnahme von Tauchern durch das Unterwasserfahrzeug gemäß Handlungsoption I. Hierbei verbleibt bei Option (1) und (3) des Unterwasserfahrzeugs das erste Objekt auf seinem Kurs zum vereinbarten Treffpunkt bei Option (1) oder dem Punkt, den das erste Objekt für den vereinbarten Treffpunkt hält gemäß Option (3). Übersendet das Unterwasserfahrzeug in Option (2) Informationen zu einem neuen Treffpunkt, so steuert das erste Objekt gemäß Option I den neuen Treffpinkt an. Wenn ein Treffen unter Wasser nicht erfolgreich durchgeführt werden kann, so erfolgt der Versuch einer Überwasserkommunikationsversuch gemäß Handlungsoption II, unabhängig davon, ob bereits das Unterwasserfahrzeug die Option (4) oder (5) gewählt hat. Hat das Unterwasserfahrzeug Option (4) gewählt, si erfolgt gemäß Option II die Abstimmung des weiteren Vorgehens. Kann eine Überwasserkommunikation erfolgreich aufgebaut werden, so kann beispielsweise ein neuer Treffpunkt vereinbart werden. Alternativ kann auch über eine Überwasserkommunikation gemeinsam festgestellt werden, dass ein sicheres Treffen nicht möglich ist und ein Abbruch vorgenommen wird. Stellt das erste Objekt gemäß Option II fest, dass eine Überwasserkommunikation nicht möglich ist, beispielsweise, weil das Unterwasserfahrzeug bereits Option(5) gewählt hat, dann der Abbruch gemäß Option III, wenn ein Treffen nicht erfolgreich war oder absehbar nicht erfolgreich durchgeführt werden kann. Handelt es sich bei dem ersten Objekt um einen Taucher oder wird das erste Objekt von einem Taucher transportiert, so kann der Taucher beispielsweise an Land zurückkehren, wobei die Rückkehr auch umfasst, wenn beispielsweise der Taucher vorher nicht an Land, sondern nur im Wasser operiert hat. Ebenfalls kann im Sinne dieser Option auch das Anschwimmen eines neutralen Schiffes oder das Anschwimmen eines feindlichen Schiffes umfasst sein, wobei zum Schutz des Unterwasserfahrzeugs auf die kurz- oder auch langfristige Rückkehr für die Taucher verzichtet werden muss. Handelt es sich bei dem ersten Objekt um ein unbemanntes Unterwasserfahrzeug, so kann der Abbruch die Selbstversenkung des unbemannten Unterwasserfahrzeugs umfassen. Das Unterwasserfahrzeug wird sich bei einem Abbruch zurückziehen und beispielsweise zum Stützpunkt oder einem Flottenverband zurückkehren.

Hierbei stellt die Reihenfolge der Handlungsoptionen des ersten Objekts I, II und III eine klare Rangfolge dar.

Die Anweisung zum Ansteuern des Treffpunkts kann beispielsweise Richtung, Tauchtiefe, Änderung der Tauchtiefe, Bewegungsweite und/oder Bewegungszeit bei konstanter Geschwindigkeit, Wartezeiten bei Änderung der Tauchtiefe umfassen. Des Weiteren kann die Anweisung auch mehrere Schritte zum Ansteuern des Treffpunkts umfassen, sofern dieses durch Strömung, Hindernisse, die Ausrichtung des Unterwasserfahrzeugs oder andere Einflüsse, beispielsweise den Erfassungsradius eines Dritten, erforderlich ist.

Wird in Schritt c) eine Richtungsinformation des ersten Objekts mit übersendet oder kann diese Richtungsinformation aus dem in Schritt d) empfangenen ersten ersten Signal ermittelt werden und wenn diese Richtungsinformation bereits auf den Treffpunkt, beispielsweise die aktuelle Position des Unterwasserfahrzeugs gerichtet ist, so ist eine Kommunikation nicht erforderlich, das erste Objekt muss lediglich die Position oder den Kurs halten.

Ebenso kann es bei Handlungsoption (2) oder (4) erforderlich sein, aus dem in Schritt d) empfangenen ersten Signal die absolute Geoposition des erste Objekts zu ermitteln, sofern diese mit der absoluten Geoposition des Treffpunkts zur Ermittlung der zu wählenden Fortbewegungsrichtung notwendig ist. Unter absoluter Geoposition ist eine Angabe beispielsweise in Breite, Länge und Tiefe zu verstehen, welche die exakte Position angibt.

In einer weiteren Ausführungsform der Erfindung wird Schritt c) kontinuierlich, regelmäßig oder unregelmäßig wiederholt wird. Das erste Objekt kann kontinuierlich das erste erste Signal aussenden, dieses ist jedoch energieaufwändig und verrät die Position des ersten Objekts mit der höchsten Wahrscheinlichkeit. Eine regelmäßige Wiederholung des Aussendens des ersten ersten Signals durch das erste Objekt vereinfacht das Verfahren, die Regelmäßigkeit erhöht jedoch die Entdeckungswahrscheinlichkeit. Eine unregelmäßige Wiederholung kann auch beispielsweise durch eine manuelle Auslösung erfolgen und somit quasi zufällig.

In einer weiteren Ausführungsform der Erfindung wird zusätzlich die Bewegungsrichtung des ersten Objekts ermittelt und nur bei einer Abweichung zwischen der Bewegungsrichtung des ersten Objektes und einer zur Erreichung des Treffpunkts notwenigen Bewegungsrichtung diese Information nach Handlungsoption (2) oder (4) übermittelt.

Vorteil dieser Ausführungsform ist es, dass das Unterwasserfahrzeug das Aussenden der ersten zweiten Signale minimieren oder gegebenenfalls vollständig auf die Kommunikation verzichten kann, sodass die Detektionswahrscheinlichkeit minimiert werden kann.

Dennoch kann es vorteilhaft sein, regelmäßig aktualisierte Informationen bei Handlungsoption (2) oder (4) zu senden, da beispielsweise Strömungen oder andere lokale Änderungen in der Umgebung zu einem Abdriften des ersten Objekts führen können.

In einer weiteren Ausführungsform der Erfindung wird nach erfolgreicher Kommunikation in Schritt a)II ein neuer Treffpunkt vereinbart und das erste Objekt und/oder das Unterwasserfahrzeug steuert den neuen Treffpunkt an.

In einer weiteren Ausführungsform der Erfindung nimmt zwischen Schritt II und III das erste Objekt über eine Satellitenkommunikation Kontakt zu einer dritten Stelle auf und holt weitere Instruktionen ein. Bei der dritten Stelle kann es sich beispielsweise um eine Einsatzleitstelle oder dergleichen handeln. Anschließend können dann Einsatzparameter gegebenenfalls angepasst werden.

In einer weiteren Ausführungsform der Erfindung verwendet das erste Objekt zur Verwendung einer drahtlosen Kommunikation in Schritt a)II eine Antenne zur Überwasserkommunikation. Beispielsweise und insbesondere wird die Antenne zur Überwasserkommunikation hierzu zunächst ausgefahren. Dieses kann beispielsweise eine auf einer Boje sitzende Antenne zur Überwasserkommunikation sein, die dann beispielsweise über eine Verbindungsleitung mit dem ersten Objekt verbunden ist. Dieses hat zwei Vorteile. Zum einen wird dadurch die Entdeckungswahrscheinlichkeit aufgrund der geringeren optischen Sichtbarkeit reduziert. Aber als zweites ist gegebenfalls wichtiger, dass Taucher dadurch auf einer Tauchtiefe bleiben können und somit keine Dekompressionsstufen eingehalten werden müssen und damit Zeitverluste vermieden werden können.

In einer weiteren Ausführungsform der Erfindung ist die drahtlosen Kommunikation über Wasser eine optische Kommunikation. Hierbei kann eine ungerichtete Lichtquelle verwendet werden. Insbesondere nach Kontaktaufnahme wird die optische Übertragung gerichtet durchgeführt. Beispiel hierfür sind Morselichter an Schiffen mit optischen Elementen für eine möglichst parallele Strahlführung oder die Kommunikation mittels eines Lasers.

In einer weitere Ausführungsform der Erfindung ist zwischen dem Unterwasserfahrzeug und dem ersten Objekt kein exakter Treffpunkt vereinbart, der beispielsweise eine Aufnahme des ersten Objekts durch das Unterwasserfahrzeug ermöglichen würde. Vielmehr ist nur ein ungefährer Treffpunkt oder ein Zielbereich oder ein Aufnahmegebiet definiert, der so gewählt ist, dass in diesem Zielbereich eine Kommunikation entweder mittels der ersten Kommunikationsvorrichtung oder einer Überwasserkommunikationsvorrichtung möglich sein sollte. Vorteil dieser Ausführungsform ist, dass selbst bei Verlust der Information des Zielbereichs die Entdeckungswahrscheinlichkeit für das Unterwasserfahrzeug gering ist. Soll das erste Objekt durch das Unterwasserfahrzeug aufgenommen werden so kann zur Aufnahme des ersten Objekts durch das Unterwasserfahrzeug beispielsweise ein Unterseeboot das erste Objekt zunächst den Zielbereich oder das Aufnahmegebiet ansteuern. Somit bewegt sich das erste Objekt vor Schritt c) ohne Verwendung der ersten Kommunikationsvorrichtung in ein Aufnahmegebiet. Beispielsweise befindet sich das Unterwasserfahrzeug in einem ersten Wartebereich in der Nähe des geplanten ungefähren Treffpunkts. Das erste Objekt zunächst einen ersten Zielbereich an und beginnt nach dem Erreichen des ersten Zielbereichs mit dem erfindungsgemäßen Verfahren. Das Unterwasserfahrzeug kann nun das erste Objekt entweder direkt zu seiner aktuellen Position leiten oder selbst einen Treffpunkt ansteuern und das erste Objekt zu diesem Treffpunkt leiten. Besonders bevorzugt ist das Unterwasserfahrzeug am Treffpunkt ohne Fahrt, um eine Beschädigung oder Verletzung oder Beschädigung des ersten Objekts durch die eigene Antriebsvorrichtung zu vermeiden.

In einer weiteren Ausführungsform der Erfindung weist das erste zweite Signal mehrere Frequenzen auf. Durch die Aufspaltung auf mehrere Frequenzen ist es leichter das erste zweite Signal im Hintergrundrauschen zu verstecken und so die Detektionswahrscheinlichkeit zu verringern. Als Verfahren zur Aufspaltung auf mehrere Frequenzen ist beispielsweise und insbesondere die Signalspreizung zu nennen.

In einer weiteren Ausführungsform der Erfindung stehen dem erste Objekt und Unterwasserfahrzeug eine Mehrzahl an Frequenzen und/oder Frequenzkombinationen zur Übertragung des ersten zweiten Signals zur Verfügung. Dieses hat den Vorteil, dass sowohl Unterwasserfahrzeug als auch das erste Objekt die identische Auswahl aus der Mehrzahl an Frequenzen und/oder Frequenzkombinationen auswählen müssen. Hierdurch erfolgt im gewissen Maße eine Freund-Feind-Erkennung, da ein erstes Objekt über diese Kenntnisse verfügen muss. Somit reicht es nicht die erste Kommunikationsvorrichtung zu erbeuten, um sich unberechtigt an das Unterwasserfahrzeug annähern zu können. Ist ein Operateur am ersten Objekt, beispielsweise ein Taucher, so ist die manuelle Auswahl bevorzugt, da dadurch eine Zwei-Faktor-Autorisierung erreicht wird.

In einer weiteren Ausführungsform der Erfindung enthält das erste zweite Signal ausschließlich alphanummerische Daten, also um einfache Daten, welche somit auch über Datenkanäle mit geringer Datenübertragungsrate leicht übertragbar sind. Ebenso kann eine kleine Datenmenge auch leichter zu übertragen werden, dass es für eine mithörende dritte Partei schwer wird, einen Datenstrom überhaupt als Datenstrom zu erkennen. Alle diese Optionen sind um so einfacher, je geringer die übertragene Datenmenge ist. Insbesondere enthält das erste zweite Signal lediglich eine relative Angabe zur Kurskorrektur, beispielsweise einen horizontalen und oder einen vertikalen Winkel zur Kurskorrektur. Hierdurch ist es für einen Dritten, welcher die Daten analysiert zusätzlich notwendig auch Position und Richtung des ersten Objekts zu kennen, um die Position des Unterwasserfahrzeugs extrapolieren zu können.

In einer weiteren Ausführungsform der Erfindung wird die Stärke des erste ersten Signals in Schritt c) auf die erwartete Entfernung zum Unterwasserfahrzeug angepasst. Durch eine Anpassung auf die erwartete Entfernung kann die Signalstärke auf ein Minimum reduziert werden. Hierdurch wird zum einen der Energieverbrauch minimiert. Zum anderen wird aber auch die Detektionswahrscheinlichkeit reduziert, da ein Dritter sich somit in unmittelbarer Umgebung aufhalten muss.

In einer weiteren Ausführungsform der Erfindung wird die Frequenz des erste ersten Signals in Schritt c) auf die erwartete Entfernung zum Unterwasserfahrzeug angepasst. Die Reichweite kann beispielsweise durch eine höhere Frequenz reduziert werden. Hierdurch wird zum einen der Energieverbrauch optimiert. Zum anderen wird aber auch die Detektionswahrscheinlichkeit reduziert, da ein Dritter sich somit in unmittelbarer Umgebung aufhalten muss.

In einer weiteren Ausführungsform der Erfindung wird die Stärke und die Frequenz des erste ersten Signals in Schritt c) auf die erwartete Entfernung zum Unterwasserfahrzeug angepasst. Durch die Kombination wird insbesondere die Detektionswahrscheinlichkeit maximal reduziert, da ein Dritter sich somit in unmittelbarer Umgebung aufhalten muss.

In einer weiteren Ausführungsform der Erfindung wird Modulationsart des ersten ersten Signals in Schritt c) auf die erwartete Entfernung zum Unterwasserfahrzeug angepasst.

In einer weiteren Ausführungsform der Erfindung wird die Stärke oder Frequenz des ersten zweiten Signals auf die Entfernung und/oder Richtung zum ersten Objekt angepasst. Bevorzugt und technisch am einfachsten wird die Stärke des ersten zweiten Signals auf die Entfernung zum ersten Objekt angepasst. Auch hierdurch kann die Detektionsanschaulichkeit reduziert werden. Das Unterwasserfahrzeug kann in der Ortung des ersten Objekts die Anpassung der Stärke des ersten zweiten Signals vergleichsweise einfach und zuverlässig vornehmen.

In einer weiteren Ausführungsform der Erfindung wird die Frequenz des ersten zweiten Signals auf die Entfernung und/oder Richtung zum ersten Objekt angepasst. Bevorzugt und technisch am einfachsten wird die Frequenz des ersten zweiten Signals auf die Entfernung zum ersten Objekt angepasst, beispielsweise eine höhere Frequenz für eine geringere Entfernung gewählt. Auch hierdurch kann die Detektionsanschaulichkeit reduziert werden. Das Unterwasserfahrzeug kann in der Ortung des ersten Objekts die Anpassung der Frequenz des ersten zweiten Signals vergleichsweise einfach und zuverlässig vornehmen.

In einer weiteren Ausführungsform der Erfindung wird die Stärke und die Frequenz des ersten zweiten Signals auf die Entfernung und/oder Richtung zum ersten Objekt angepasst. Hierdurch kann die Detektionsanschaulichkeit weiter reduziert werden. Das Unterwasserfahrzeug kann in der Ortung des ersten Objekts die Anpassung der Stärke und der Frequenz des ersten zweiten Signals vergleichsweise einfach und zuverlässig vornehmen.

In einer weiteren Ausführungsform der Erfindung wird die Modulationsart des ersten zweiten Signals in Schritt (2) auf die Entfernung zum ersten Objekt angepasst

In einer weiteren Ausführungsform der Erfindung enthält das erste erste Signal eine Zeitinformation oder ist mit einer Zeitinformation verknüpfbar. Durch die Zeitinformation kann die Entfernung vom Unterwasserfahrzeug zum ersten Objekt einfach und zuverlässig ermittelt werden. Hierzu kann die Zeitinformation direkt in das erste erste Signal eincodiert sein. Alternativ und/oder zusätzlich kann das erste Objekt die ersten ersten Signale zu vereinbarten Zeitpunkten absenden, sodass das Unterwasserfahrzeug jedem empfangen im ersten ersten Signal einen vereinbarten Zeitpunkt zuordnen und damit eine Zeitinformation mit dem ersten ersten Signal verknüpfen kann. Als Zeitinformation kann zum Beispiel auch eine definierte Pause im ersten ersten Signal oder ein zeitlich definiertes Senden eines Referenzsignals auf einer anderen Frequenz sein.

In einer weiteren Ausführungsform der Erfindung enthält das erste erste Signal weitere Informationen. Beispielsweise kann das erste erste Signal eine Restlaufzeit von Tauchern als weitere Information enthalten, beispielsweise auf Basis der Atemluftvorräte. Weiter beispielsweise kann das erste erste Signal auch eine Information zur Freund-Feind-Erkennung enthalten. Weiter beispielsweise kann das erste erste Signal Notfallinformationen, beispielsweise medizinischer oder technischer Art, enthalten.

In einer weiteren Ausführungsform der Erfindung enthält das erste zweite Signal weitere Informationen. Beispielsweise kann das erste zweite Signal Umgebungsinformationen enthalten. Weiter beispielsweise kann das erste zweite Signal auch eine Information zur Vermeidung des Treffpunktes enthalten, wenn beispielsweise eine gefahrlose Aufnahme des ersten Objekts durch das Unterwasserfahrzeug am Treffpunkt nicht möglich ist. Weiter beispielsweise kann das erste zweite Signal auch eine Information über die durch das erste Objekt durchgeführte Mission oder Anweisungen enthalten. Beispielsweise kann das erste zweite Signal auch eine Information enthalten, dass die Annäherung am Treffpunkt als gefahrlos bewertet wird.

In einer weiteren Ausführungsform der Erfindung werden die Informationen des ersten zweiten Signals auf einer Anzeigevorrichtung der Kommunikationsvorrichtung angezeigt. Diese Ausführungsform ist insbesondere bei der Verwendung bei Tauchern bevorzugt.

Selbstverständlich kann die Kommunikationsvorrichtung bereits beim Absetzen des ersten Objekts durch das Unterwasserfahrzeug verwendet werden. Beispielsweise und insbesondere wenn mehrere Taucher aus einem Unterwasserfahrzeug abgesetzt werden kann während des Ausschleusevorgangs oder unmittelbar danach eine Aktualisierung von Missionsinformationen über ein erstes zweites Signal erfolgen.

In einer weiteren Ausführungsform der Erfindung weist das Verfahren zusätzlich die folgenden Schritte auf:
A) Senden eines zweiten ersten Signals durch eine zweite Kommunikationsvorrichtung eines zweiten Objekts,
B) Empfangen des zweiten ersten Signals durch die erste Schallempfangsvorrichtung des Unterwasserfahrzeugs,
C) Ermitteln der durch das zweite Objekt zu wählenden Fortbewegungsrichtung zum Erreichen des Treffpunkts,
D) Übertragen der Richtungsinformation in einem zweiten zweiten Signal mittels der ersten Schallsendevorrichtung an die zweite Kommunikationsvorrichtung,
E) Ansteuern des Treffpunkts durch das zweite Objekt mit Hilfe der Richtungsinformation.

Somit können sowohl das erste Objekt als auch das zweite Objekt zum Treffpunkt geführt werden.

Es ist hierbei möglich, dass das erste zweite Signal und das zweite zweite Signal auf gleicher Frequenz beziehungsweise mit den gleichen Frequenzen übertragen werden. Somit wären beide zweiten Signale für beide Objekte empfangbar. In diesem Fall muss die Richtungsinformation auch eine Information enthalten, für welches Objekt diese gedacht ist. Vorteil ist, dass allen Objekten jederzeit alle Informationen zur Verfügung stehen.

Es ist hierbei möglich, dass das erste zweite Signal und das zweite zweite Signal auf gleicher Frequenz beziehungsweise mit den gleichen Frequenzen übertragen werden, aber unterschiedliche Codierungen aufweisen. Somit kann nur das Objekt mit dem richtigen Entschlüsselungscode die Informationen empfangen. Hierdurch können Fehlinterpretationen ausgeschlossen werden.

Es ist alternativ möglich, dass das erste zweite Signal und das zweite zweite Signal auf verschiedener Frequenz beziehungsweise mit den verschiedenen Frequenzen übertragen werden. Somit ist eine orthogonale Kommunikation möglich, eine gegenseitige Beeinflussung ist somit ausgeschlossen.

Für das zweite Objekt sind alle oben beschriebenen weiteren Ausführungsformen analog möglich. Die weiteren Ausführungsformen können hierbei unabhängig für das erste Objekt und das zweite Objekt sein.

Des Weiteren können auch weitere Objekte, beispielsweise drei, vier, fünf oder mehr entsprechend zum Treffpunkt geführt werden.

Zusätzlich kann ein Objekt auch selber weitere Objekte führen, beispielsweise kann in einer Gruppe von Tauchern ein Taucher mit einer Kommunikationsvorrichtung ausgestattet sein. Weitere Taucher schwimmen mit diesem zusammen und folgen so dem Taucher mit der Kommunikationsvorrichtung zum Treffpunkt.

Im Folgenden wird eine beispielhafte Taucherkommunikationsvorrichtung zur Durchführung des erfindungsgemäßen Verfahrens beschrieben. Die Taucherkommunikationsvorrichtung kann als tragbare Elektronik, beispielsweise eine am Unterarm eines Tauchers tragbare Vorrichtung sein. Die Taucherkommunikationsvorrichtung kann aber auch Bestandteil eines Taucherverbringungsfahrzeuges oder eines Mini-Unterseebootes sein. Ebenso kann diese Bestandteil eines autonomen Unterwasserfahrzeugs sein. Die Taucherkommunikationsvorrichtung weist wenigstens ein erstes Modul mit einer Schallsendevorrichtung und einer Schallempfangsvorrichtung auf. Weiter weist die Taucherkommunikationsvorrichtung ein zweites Modul auf. Das zweite Modul ist zur drahtlosen Kommunikation über Wasser ausgebildet. Damit ist die Taucherkommunikationsvorrichtung geeignet, das erfindungsgemäße Verfahren durchzuführen.

In einer weiteren Ausführungsform weist das zweite Modul eine Antenne, beispielsweise und bevorzugt eine ausfahrbare Antenne, auf. Beispielsweise weist das zweite Modul eine Boje mit einer Antenne auf, die über eine Verbindung, beispielsweise einen Draht verbunden ist. Beispielsweise kann der Draht nach der Kommunikation auch gelöst und somit die Boje mit der Antenne aufgegeben werden.

In einer weiteren Ausführungsform der Erfindung ist das zweite Modul sowohl zur Funkkommunikation als auch zur Satellitenkommunikation ausgebildet.

Nachfolgend ist das erfindungsgemäße Verfahren anhand eines in der Zeichnung dargestellten Ausführungsbeispiels näher erläutert.

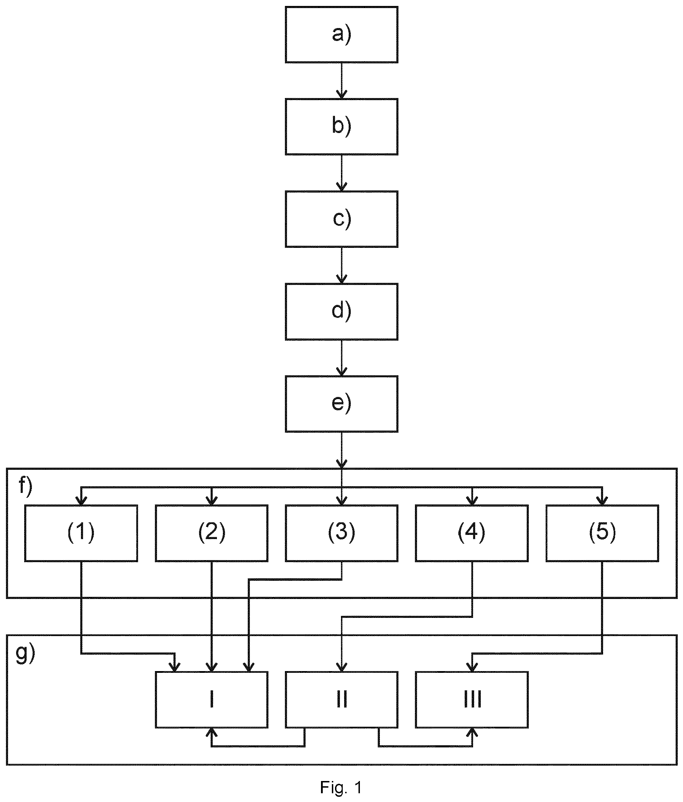

### Fig. 1 Ablaufdiagramm

In Fig. 1 ist das erfindungsgemäße Verfahren dargestellt.

Zunächst wird in Schritt a) ein Treffpunkt vereinbart, beispielsweise bevor das Unterwasserfahrzeug einen Taucher oder eine Gruppe von Tauchern absetzt. Einer der Taucher trägt eine erfindungsgemäße Taucherkommunikationsvorrichtung. Nachdem die von den Tauchern durchgeführte Mission beendet ist, kehren diese in Schritt b) zum vereinbarten Treffpunkt zurück. Da die Taucher hierbei jedoch beispielsweise durch Strömung unbemerkt abgetrieben werden können, wird in Schritt c) ein erstes erstes Signal ausgesendet und in Schritt d) durch das Unterwasserfahrzeug empfangen und hieraus in Schritt e) die weitere Bewegung der Taucher abgeschätzt. Hieraus ergeben sich je nach dem Ergebnis verschiedene Handlungsoptionen.

Sofern die Taucher noch auf Kurs zum Treffpunkt sind, verbleibt das Unterwasserfahrzeug gemäß Handlungsoption (1) auf Position und das Treffen wird gemäß Handlungsoption I durchgeführt.

Sofern eine Abweichung festgestellt wird und eine Unterwasserkommunikation als sicher eingestuft wird, kann das Unterwasserfahrzeug gemäß Handlungsoption (2) die Taucher instruieren. Die Taucher können dann den Kurs anpassen und es kommt gemäß Handlungsoption I erfolgreich zum Treffen.

Alternativ kann bei einer Feststellung einer Abweichung auch das Unterwasserfahrzeug seine Position nach Handlungsoption (3) anpassen. So kann auf eine Kommunikation verzichtet werden und es kommt dennoch gemäß Handlungsoption I zu einem erfolgreichen Treffen.

Stehen diese Optionen nicht zur Verfügung, beispielsweise weil bei einer Abweichung ein Treffen nicht möglich ist, , so kann das Unterwasserfahrzeug nach Handlungsoption (4) auf Seerohrtiefe gehen und eine Kommunikationsvorrichtung ausfahren und abwarten. Wenn die Unterwasserkommunikation nicht erfolgreich war, so versuchen diese gemäß Handlungsoption II Kontakt über eine drahtlose Überwasserkommunikation aufzunehmen. Dieses kann insbesondere mittels Funk oder optisch erfolgen. Bevorzugt erfolgt dieses dadurch, dass ein Taucher eine Boje mit einer Funkantenne an einem Draht aufsteigen lässt. Hierdurch müssen die Taucher ihre Tauchtiefe nicht verändern, wodurch auf Dekompressionsschritte beim Auftauchen verzichtet werden kann, insbesondere wenn die Taucher beispielsweise auf großer Tiefe operieren. Nach erfolgreicher Kommunikation kann dann ein Treffen an einem neuen Treffpunk gemäß Handlungsoption I erfolgen. Alternativ kann festgestellt werden, dass aufgrund der Feindlage ein Treffen nicht möglich ist und die Taucher sich unabhängig von Unterseeboot gemäß Handlungsoption III in Sicherheit zu bringen haben. Diese letzte Option bleicht auch nur übrig, wenn der Versuch der Überwasserkommunikation scheitert, beispielsweise, weil die Sendeleistung des ersten Objekts zu gering ist und/oder hoher Wellengang die Kommunikation unmöglich macht. Ebenso kann gemäß Handlungsoption II Kontakt , beispielsweise über Satellitenkommunikation beispielsweise mit einer Einsatzleitstelle aufgenommen werden, aus welcher sich dann das weitere Vorgehen ergibt.

Sollte das Unterwasserfahrzeug bereits aufgrund der Feindlage in Verbindung mit der Abschätzung der Bewegung der Taucher zu dem Entschluss kommen, dass ein Treffen ausgeschlossen ist, so kann das Unterwasserfahrzeug auch direkt gemäß Handlungsoption (5) den Versuch abbrechen und sich zurückziehen. Zwar werden die Taucher dann immer noch gemäß Handlungsoption II zunächst versuchen Kontakt aufzunehmen. Dieses ist jedoch durch die Abwesenheit des Unterseebootes zum Scheitern verurteilt, sodass letztendlich nur die Handlungsoption III und damit die eigene Sicherheit verbleibt.

## Patentansprüche

1. Verfahren zum Treffen wenigstens eines ersten Objekts und eines Unterwasserfahrzeugs an einem Treffpunkt unter Wasser, wobei das erste Objekt wenigstens eine erste Kommunikationsvorrichtung aufweist, wobei das Unterwasserfahrzeug wenigstens eine erste Schallempfangsvorrichtung und wenigstens eine erste Schallsendevorrichtung aufweist, wobei das Verfahren die folgenden Schritte aufweist:
a) Vereinbaren eines Unterwassertreffpunktes zwischen dem ersten Objekt und dem Unterwasserfahrzeug,
b) Ansteuern des Unterwassertreffpunktes durch das erste Objekt,
c) Senden eines ersten ersten Signals durch die erste Kommunikationsvorrichtung des ersten Objekts,
d) Empfangen des ersten ersten Signals durch die erste Schallempfangsvorrichtung des Unterwasserfahrzeugs,
e) Abschätzen der weiteren Bewegung des ersten Objekts mit der derzeitigen Fortbewegungsrichtung,
**gekennzeichnet durch**:
f) Auswählen einer Handlungsoption durch das erste Unterwasserfahrzeug ausgewählt aus der Liste umfassend:
(1) Verbleiben des Unterwasserfahrzeugs an der Position, sofern die derzeitige Fortbewegungsrichtung des ersten Objekts zum Unterwasserfahrzeug führt,
(2) Ermitteln der durch das erste Objekt zu wählenden Fortbewegungsrichtung zum Erreichen des Treffpunkts durch das Unterwasserfahrzeug und Übertragen der Richtungsinformation in einem ersten zweiten Signal mittels der ersten Schallsendevorrichtung an die erste Kommunikationsvorrichtung, sofern eine aktive Übertragung als gefahrlos eingestuft wird,
(3) Verfahren des Unterwasserfahrzeugs an einen aus der abgeschätzten weiteren Bewegung des ersten Objekts neuen Treffpunkt,
(4) Ausfahren wenigstens einer Überwasserkommunikationsvorrichtung und warten auf eine Überwasserkontaktaufnahme durch das erste Objekt,
(5) Abbruch des Versuchs eines Treffens und Entfernen des Unterwasserfahrzeugs, sofern ein Treffen als nicht sicher eingeschätzt wird,
g) Auswählen einer Handlungsoption durch das erste Objekt ausgewählt aus der Liste umfassend:
I. Treffen mit dem Unterwasserfahrzeug, oder sofern ein Treffen mit dem Unterwasserfahrzeug nicht erfolgreich möglich ist,
II. Verwendung der drahtlosen Kommunikation über Wasser zur Kontaktierung des Unterwasserfahrzeugs und wenn diese Kommunikation nicht erfolgreich ist, oder wenn dieses nicht erfolgreich ist,
III. Abbruch.

2. Verfahren nach Anspruch 1, **dadurch gekennzeichnet, dass** nach erfolgreicher Kommunikation in Schritt II ein neuer Treffpunkt vereinbart wird und das erste Objekt und/oder das Unterwasserfahrzeug den neuen Treffpunkt ansteuert.

3. Verfahren nach einem der vorstehenden Ansprüche, **dadurch gekennzeichnet, dass** zusätzlich in Schritt e) die Bewegungsrichtung des ersten Objekts ermittelt wird.

4. Verfahren nach einem der vorstehenden Ansprüche, **dadurch gekennzeichnet, dass** zwischen Schritt II und III das erste Objekt über eine Satellitenkommunikation Kontakt zu einer dritten Stelle aufnimmt und weitere Instruktionen einholt.

5. Verfahren nach einem der vorstehenden Ansprüche, **dadurch gekennzeichnet, dass** zur Verwendung einer drahtlosen Kommunikation in Schritt II das erste Objekt eine Antenne zur Überwasserkommunikation verwendet.

6. Verfahren nach einem der vorstehenden Ansprüche, **dadurch gekennzeichnet, dass** das erste Objekt sich vor Schritt c) ohne Verwendung der ersten Kommunikationsvorrichtung in ein Aufnahmegebiet bewegt.

7. Verfahren nach einem der vorstehenden Ansprüche, **dadurch gekennzeichnet, dass** das erste zweite Signal ausschließlich alphanummerische Daten enthält.

8. Verfahren nach einem der vorstehenden Ansprüche, **dadurch gekennzeichnet, dass** die Stärke des ersten ersten Signals in Schritt c) auf die erwartete Entfernung zum Unterwasserfahrzeug angepasst wird.

9. Verfahren nach einem der vorstehenden Ansprüche, **dadurch gekennzeichnet, dass** die Frequenz des ersten ersten Signals in Schritt c) auf die erwartete Entfernung zum Unterwasserfahrzeug angepasst wird.

10. Verfahren nach einem der vorstehenden Ansprüche, **dadurch gekennzeichnet, dass** die Modulationsart des ersten ersten Signals in Schritt c) auf die erwartete Entfernung zum Unterwasserfahrzeug angepasst wird.

11. Verfahren nach einem der vorstehenden Ansprüche, **dadurch gekennzeichnet, dass** die Stärke des ersten zweiten Signals in Schritt (2) auf die Entfernung zum ersten Objekt angepasst wird.

12. Verfahren nach einem der vorstehenden Ansprüche, **dadurch gekennzeichnet, dass** die Frequenz des ersten zweiten Signals in Schritt (2) auf die Entfernung zum ersten Objekt angepasst wird.

13. Verfahren nach einem der vorstehenden Ansprüche, **dadurch gekennzeichnet, dass** die Modulationsart des ersten zweiten Signals in Schritt (2) auf die Entfernung zum ersten Objekt angepasst wird.

14. Verfahren nach einem der vorstehenden Ansprüche, **dadurch gekennzeichnet, dass** das erste erste Signal eine Zeitinformation enthält oder mit einer Zeitinformation verknüpfbar ist.

## Claims

1. A method for at least a first object and an underwater vehicle to meet at a meeting point underwater, the first object having at least a first communication device, the underwater vehicle having at least a first sound receiving device and at least a first sound transmitting device, the method comprising the steps of:
a) agreeing on an underwater meeting point between the first object and the underwater vehicle,
b) the first object heading for the underwater meeting point,
c) transmission of a first signal by the first communication device of the first object,
d) reception of the first signal by the first sound receiving device of the underwater vehicle,
e) estimating the further movement of the first object with the current direction of movement, **characterized by:**
f) selecting an action option by the first underwater vehicle selected from the list comprising:
(1) the underwater vehicle remaining at the position, provided that the current direction of movement of the first object leads to the underwater vehicle,
(2) determining the direction of movement to be chosen by the first object in order to reach the meeting point by the underwater vehicle and transmitting the directional information in a first second signal by means of the first sound transmission device to the first communication device, provided that an active transmission is deemed to be safe,
(3) moving the underwater vehicle to a new meeting point based on the estimated further movement of the first object,
(4) deploying at least one surface communication device and waiting for the first object to make contact above water,
(5) aborting the attempt to meet and removing the underwater vehicle if a meeting is deemed unsafe,
g) selecting an action option by the first object, selected from the list comprising:
I. meeting with the underwater vehicle, or if a meeting with the underwater vehicle is not possible,
II. using wireless communication above water to contact the underwater vehicle and if this communication is not successful, or if this is not successful,
III. aborting.

2. A method according to claim 1, **characterized in that** after successful communication in step II, a new meeting point is agreed and the first object and/or the underwater vehicle head for the new meeting point.

3. A method according to any of the preceding claims, **characterized in that** in addition, in step e), the direction of movement of the first object is determined.

4. A method according to any of the preceding claims, **characterized in that** between step II and III the first object contacts a third party via satellite communication and obtains further instructions.

5. A method according to any of the preceding claims, **characterized in that**, for using wireless communication in step II, the first object uses an antenna for surface communication.

6. A method according to any of the preceding claims, **characterized in that** the first object moves into an area of reception prior to step c) without using the first communication device.

7. A method according to one of the preceding claims, **characterized in that** the first second signal contains exclusively alphanumeric data.

8. A method according to any of the preceding claims, **characterized in that** the strength of the first signal in step c) is adjusted to the expected distance to the underwater vehicle.

9. A method according to any of the preceding claims, **characterized in that** the frequency of the first signal in step c) is adapted to the expected distance to the underwater vehicle.

10. A method according to any of the preceding claims, **characterized in that** the type of modulation of the first signal in step c) is adapted to the expected distance to the underwater vehicle.

11. A method according to any of the preceding claims, **characterized in that** the strength of the first second signal in step (2) is adapted to the distance to the first object.

12. A method according to any of the preceding claims, **characterized in that** the frequency of the first second signal in step (2) is adapted to the distance to the first object.

13. A method according to any of the preceding claims, **characterized in that** the type of modulation of the first second signal in step (2) is adapted to the distance to the first object.

14. A method according to one of the preceding claims, **characterized in that** the first signal contains a time information or can be linked to a time information.

## Revendications

1. Méthode permettant à au moins un premier objet et à un véhicule sous-marin de se rencontrer à un point de rencontre sous l'eau, le premier objet ayant au moins un premier dispositif de communication, le véhicule sous-marin ayant au moins un premier dispositif de réception du son et au moins un premier dispositif de transmission du son, la méthode comprenant les étapes suivantes :
a) convenir d'un point de rencontre sous-marin entre le premier objet et le véhicule sous-marin,
b) le premier objet se dirigeant vers le point de rencontre sous-marin,
c) transmission d'un premier signal par le premier dispositif de communication du premier objet,
d) réception du premier signal par le premier dispositif de réception sonore du véhicule sous-marin,
e) l'estimation du mouvement ultérieur du premier objet dans la direction actuelle du mouvement, **caractérisée par** :
f) sélection d'une option d'action par le premier véhicule sous-marin choisie dans la liste comprenant :
(1) le véhicule sous-marin reste à la position, à condition que la direction actuelle du mouvement du premier objet conduise au véhicule sous-marin,
(2) déterminer la direction du mouvement que doit choisir le premier objet pour atteindre le point de rencontre avec le véhicule sous-marin et transmettre l'information directionnelle dans un premier second signal au moyen du premier dispositif de transmission sonore vers le premier dispositif de communication, à condition qu'une transmission active soit considérée comme sûre,
(3) déplacer le véhicule sous-marin vers un nouveau point de rencontre sur la base de l'estimation du mouvement ultérieur du premier objet,
(4) déployer au moins un dispositif de communication de surface et attendre que le premier objet entre en contact avec l'eau,
(5) interrompre la tentative de rencontre et retirer le véhicule sous-marin si la rencontre est jugée dangereuse,
g) sélection d'une option d'action par le premier objet, sélectionnée dans la liste comprenant :
I. rencontre avec le véhicule sous-marin, ou si une rencontre avec le véhicule sous-marin n'est pas possible,
II. en utilisant une communication sans fil au-dessus de l'eau pour contacter le véhicule sous-marin et, si cette communication n'aboutit pas, ou si elle n'aboutit pas, en utilisant une communication sans fil au-dessus de l'eau pour contacter le véhicule sous-marin,
III. avortement.

2. Méthode selon la revendication 1, **caractérisée par le fait qu'**après une communication réussie à l'étape II, un nouveau point de rencontre est convenu et le premier objet et/ou le véhicule sous-marin se dirigent vers le nouveau point de rencontre.

3. Procédé selon l'une quelconque des revendications précédentes, **caractérisé par le fait qu'**à l'étape e), la direction du mouvement du premier objet est déterminée.

4. Procédé selon l'une des revendications précédentes, **caractérisé par le fait qu'**entre les étapes II et III, le premier objet contacte un tiers par communication satellite et obtient des instructions supplémentaires.

5. Procédé selon l'une des revendications précédentes, **caractérisé par le fait que,** pour utiliser la communication sans fil à l'étape II, le premier objet utilise une antenne pour la communication de surface.

6. Procédé selon l'une des revendications précédentes, **caractérisé par le fait que** le premier objet se déplace dans une zone de réception avant l'étape c) sans utiliser le premier dispositif de communication.

7. Procédé selon l'une des revendications précédentes, **caractérisé par le fait que** le premier second signal contient exclusivement des données alphanumériques.

8. Méthode selon l'une des revendications précédentes, **caractérisée par le fait que** l'intensité du premier signal à l'étape c) est adaptée à la distance prévue par rapport au véhicule sous-marin.

9. Méthode selon l'une des revendications précédentes, **caractérisée par le fait que** la fréquence du premier signal à l'étape c) est adaptée à la distance prévue par rapport au véhicule sous-marin.

10. Procédé selon l'une des revendications précédentes, **caractérisé par le fait que** le type de modulation du premier signal à l'étape c) est adapté à la distance prévue par rapport au véhicule sous-marin.

11. Procédé selon l'une des revendications précédentes, **caractérisé par le fait que** l'intensité du premier second signal à l'étape (2) est adaptée à la distance par rapport au premier objet.

12. Procédé selon l'une des revendications précédentes, **caractérisé par le fait que** la fréquence du premier second signal à l'étape (2) est adaptée à la distance du premier objet.

13. Procédé selon l'une quelconque des revendications précédentes, **caractérisé par le fait que** le type de modulation du premier second signal à l'étape (2) est adapté à la distance par rapport au premier objet.

14. Procédé selon l'une des revendications précédentes, **caractérisé par le fait que** le premier signal contient une information temporelle ou peut être lié à une information temporelle.
